# EUROPEAN PATENT SPECIFICATION

(11) **EP 2 781 154 B1**
(45) Date of publication and mention of the grant of the patent: **14.08.2019**
(21) Application number: 12850726.6
(22) Date of filing: 14.11.2012
(51) Int. Cl.: A01M 1/20, A01M 29/12, A01N 25/18, A01N 53/06, A01P 7/04

(54) **VOLATILE AGENT-CONTAINING STRUCTURE**
STRUKTUR MIT FLÜCHTIGEM WIRKSTOFF
STRUCTURE CONTENANT UN AGENT VOLATILE

(30) Priority: 16.11.2011 JP 2011250480; 27.12.2011 JP 2011285408
(43) Date of publication of application: 24.09.2014
(73) Proprietor: DAINIHON JOCHUGIKU CO., LTD., Osaka-shi Osaka 550-0001 (JP)
(72) Inventor: KASHIMA, Seiichi, Toyonaka-shi Osaka 561-0827 (JP); KAKINOKI, Tomohiro, Toyonaka-shi Osaka 561-0827 (JP); KAWAJIRI, Yumi, Toyonaka-shi Osaka 561-0827 (JP); NAKAYAMA, Koji, Toyonaka-shi Osaka 561-0827 (JP); MATSUMOTO, Masuo, Osaka-shi Osaka 550-0001 (JP)
(74) Representative: Grünecker Patent- und Rechtsanwälte PartG mbB
(86) International application number: PCT/JP2012/079503
(87) International publication number: WO 2013/073571

(56) References cited:
- EP-A1- 2 377 395
- WO-A1-2011/078375
- JP-A- H10 265 303
- JP-A- 2006 025 655
- JP-A- 2007 031 401
- JP-A- 2010 285 385

## Description

### TECHNICAL FIELD

This invention relates to a volatile agent-containing three-dimensional structure formed from a resin containing a volatile agent.

### BACKGROUND ART

Pest insects most frequently enter a house through windows and the porch. In order to prevent entry of pest insects into a house, one may consider providing insect repellent instruments at these entry points.

One conventional insect repellent instrument includes a net containing a volatile insecticide and mounted in a container having open windows. Another known insect repellent instrument includes a net containing a volatile agent and fitted in a frame member (see the below-identified Patent document 1). Another example in the form of a three-dimensional structure is known from WO2011/078375 A1.

These insect repellent instruments are formed from a resin, such as a polyolefin, containing a volatile insecticide component and configured such that the insecticide component volatilizes over time to keep off pest insects. Such resin members include not only insect repellent members such as mosquito nets and insect repellent nets, but also a wide variety of resin fiber products such as sheaths including tubes and cables.

For example, the below-identified Patent document 2 proposes to form a master batch of a resin composition comprising a polyolefin resin, an insecticide such as permethrin or benfluthrin (transfluthrin), and an amorphous inorganic carrier such as amorphous silica (paragraphs [0033] to [0035]), and to knead together this master batch and a separate polyolefin resin, and form the kneaded mixture into various products by extrusion molding or injection molding (paragraph [0036]).

The below-identified Patent document 3 proposes to use, as insecticide components in insect repellent resin products, pyrethroid compounds such as metofluthrin (wherein R¹ of Chemical formula 1 in Patent documents 3, which is shown as Formula (1) below, is H, R² is -CH=CHCH₃, and R³ is a methoxymethyl group) and profluthrin (wherein R¹ and R² in Formula (1) are the same as those of metofluthrin, and R³ is a methyl group).

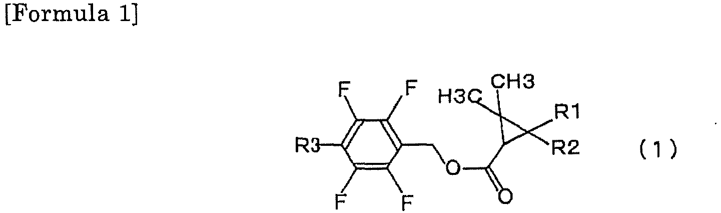

The below-identified Patent document 4 discloses a resin composition which contains a transpirable plasticizer and a bleeding accelerator in order to improve volatility of the insect repellent resin composition. Further, Patent document 4 and the below-identified Patent document 5 refer to transfluthrin as an activated insecticide compound (paragraph [0011] of Patent document 3).

WO 2011/078375 discloses an insect pest controlling resin composition comprising a thermoplastic resin, a pyrethroid compound, piperonyl butoxide and a phosphorus-based antioxidant. Said composition may be formed into a molded body wherein said molded body is preferably a thread. Said thread, may be formed into an insect pest controlling net by knitting or weaving the thread.

### PRIOR ART DOCUMENTS

Patent document 1: JP Patent Publication 2006-314284A
Patent document 2: JP Patent Publication 2008-106232A
Patent document 3: JP Patent Publication 2007-77069A
Patent document 4: JP Patent 3858929B
Patent document 5: JP Patent Publication 2001-192309A

### SUMMARY OF THE INVENTION

### OBJECT OF THE INVENTION

The insect repellent instrument disclosed in Patent document 1 is most frequently hung near a window or in a porch. Thus, it may be a nuisance or an eyesore to people. To reduce its visibility, one may consider reducing the size of the entire insect repellent instrument or reducing its thickness.

However, in order to reduce the size of the entire insect repellent instrument or to reduce its thickness, it is necessary to correspondingly reduce the size of the insecticide-containing net in the instrument, and thus the insect repellent properties.

In an arrangement in which the volatile agent-containing net is placed in a container, the larger the surface area of the net that is brought into contact with the inner wall of the container, the lower the rate of volatility of the volatile agent tends to be, and also, the more likely the volatile agent is to be adhered to the inner wall of the container, thus soiling the container.

This problem could occur when a volatile agent other than an insecticide, such as a repellent, an aromatic, or an anti-microbial agent is used too.

In producing pellets by mixing transfluthrin or metofluthrin as an insecticide component with a fine powder carrier, and kneading the thus obtained mixture in resin, as disclosed in Patent documents 2, if attempts are made to increase the concentration of the insecticide component, the pellets tend to become wetted with volatile agent due to bleeding of volatile agent, thus making it difficult to form the end product from the pellets.

An object of the present invention is to provide a volatile-agent containing structure which is large in sectional area compared to the entire size, whereby a volatile agent can be volatilized at a sufficiently high rate, and of which the surface area that is brought into contact with the container is sufficiently small, whereby volatilization is not practically limited by the contact with the container and soling of the container is prevented, and to provide resin pellets containing transfluthrin or metofluthrin of which bleeding is restricted to a suitable degree, whereby the pellets can be easily formed into an intended resin product.

### MEANS FOR ACHIEVING THE OBJECT

In order to achieve this object, the present invention provides a volatile agent-containing three-dimensional structure comprising a a plurality of corrugated members (11,12,13) formed by corrugating rod-shaped members, wherein each of the corrugated members has at least part of apexes (11a, 11 a' , 12a) thereof fixedly joined to apexes (11a, 11a' , 12a) of another of the corrugated members such that the apexes fixedly joined together cross each other, and
wherein the three-dimensional structure is formed from a resin composition containing a volatile agent having volatility and kneaded in the resin composition such that the volatile agent can bleed onto and volatilize from a surface of the three-dimensional structure.

According to the present invention, in producing the volatile agent-containing structure, at least one of insecticide components comprising transfluthrin, metofluthrin and profluthrin as a volatile agent is mixed with a fine powder carrier, the mixture is kneaded in a resin comprising an ethylene-vinyl acetate copolymer, then, if necessary, a polyolefin resin such as mainly a low-density polyethylene (LDPE) is further added, and if transfluthrin is used, a crystal deposition inhibiting component is added to form insecticide component-containing resin pellets. To the pellets, a polyolefin resin is further added, and the mixture is kneaded to produce a resin composition. The resin composition is then formed into the volatile agent-containing structure according to the present invention.

Even though metofluthrin or profluthrin acts as a crystal deposition inhibiting component, it is regarded as an insecticide component in calculating the content ratio.

Now description is made of the volatile agent-containing resin pellets (insecticide component-containing resin pellets) used in the present invention. According to the present invention, by adding not less than 5% by mass and not more than 50% by mass of an ethylene-vinyl acetate copolymer, it is possible to restrict bleeding from the pellets obtained to a suitable range. While it is necessary to adjust bleeding even if metofluthrin or profluthrin, which are both liquid at normal temperature, is used, since transfluthrin, which is crystalline at normal temperature, tends to crystallize on the surfaces of the pellets when it bleeds, if attempts are made to increase its concentration in the resin, the advantages of the present invention are remarkable especially if transfluthrin is used. If bleeding does not occur at all, the insecticide component does not volatilize. Thus, it is not preferable to completely prevent bleeding. However, by adding an ethylene-vinyl acetate copolymer as a bleed control resin by an amount within the above range, it is possible to control bleeding from the pellets. For the resin product formed by extrusion molding or injection molding using these pellets as a master batch too, it is possible to control bleeding to a level necessary for volatilization. The resin content may be adjusted by using an additional resin while keeping the content of the ethylene-vinyl acetate copolymer within the above range. Such an additional resin is preferably an LDPE, which has a good affinity for an ethylene-vinyl acetate copolymer.

The fine powder carrier, which is added by not less than 10% by mass and not more than 30% by mass, is preferably fine powder which does not react with transfluthrin or metofluthrin and which has a large surface area, such as a microcrystalline silica including white carbon. The fine powder carrier carries the insecticide component and prevents the pellets formed by kneading together with a resin from becoming wetted with insecticide component, thus making it possible to advantageously use the pellets as a master batch.

If transfluthrin is used as an insecticide component, not less than 1% by mass and not more than 20% by mass of a crystal deposition inhibiting component is preferably added. The crystal deposition inhibiting component reduces deposition of the transfluthrin, which is crystalline at normal temperature, on the surface. Compounds usable as such a crystal deposition inhibiting component include dibasic acid ester compounds, aromatic ester compounds, higher fatty acid ester compounds, pyrethroid compounds other than transfluthrin, and synergists for pyrethroid, which are liquid at normal temperature. It is preferable to use one or more than one of these compounds. It is especially preferable to use a dibasic ester compound such as dibutyl succinate. In order to further effectively prevent deposition of crystals, it is possible to additionally use phenothrin, which is a pyrethroid compound, or N-(2-ethylhexyl)-bicyclo[2,2,1]-hept-5-ene-2,3-dicarboximide, as a synergist for pyrethroid. If metofluthrin is used, this compound serves not only as a crystal deposition inhibiting component but serves also as an additional insecticide.

If transfluthrin or profluthrin is used as the insecticide component, its content in the insecticide component-containing pellets should be not less than 20% by mass and not more than 60% by mass. If metofluthrin is used, its content should be not less than 10% by mass and not more than 50% by mass. A resin composition comprising not less than 15% by mass and not more than 80% by mass of these pellets, as a master batch, with the remainder being a polyolefin resin such as a low-density polyethylene (LDPE) is formed into a volatile agent-containing structure which can volatilize the insecticide component at a suitable rate, thereby repelling insects effectively, by extrusion molding, injection molding or any other resin molding.

### ADVANTAGES OF THE INVENTION

Since the volatile agent-containing structure according to the present invention is formed of the corrugated members, compared to a substantially flat net, the surface area is large if the volume is the same. Thus, the volatile agent-containing structure has a large surface area that allows volatilization at a sufficiently high rate, even if its size is relatively small.

Since the volatile agent-containing structure according to the present invention has a three-dimensional structure, its portions that are brought into contact with the container is smaller in surface area, which minimizes a reduction in volatilization of the volatile agent due to contact with the container, and also reduces soiling of the container.

Since the pellets according to the present invention are configured to prevent excessive bleeding of transfluthrin, metofluthrin or profluthrin as the insecticide component, and to reduce deposition of crystals, they do not become wetted with pesticide component and thus can be advantageously used as a master batch to form the resin product. Since the pellets as a master batch contain transfluthrin, metofluthrin or profluthrin as the insecticide component in high concentration, i.e. by not less than 20 to 30% by mass, the volatile agent-containing structure formed from the resin composition using these pellets is also contains the insecticide component in high concentration, so that this resin product can repel insects for a prolonged period of time.

### BRIEF DESCRIPTION OF THE DRAWINGS

Fig. 1(a) is a front view of a corrugated member; Fig. 1(b) is a front view of a different corrugated member; and Fig. 1(c) is a front view of a still different corrugated member.
Fig. 2(a) is a perspective view of a three-dimensional structure; Fig. 2(b) is a partial enlarged view of a different three-dimensional structure; and Fig. 2(c) is a partial enlarged view of a still different three-dimensional structure.
Fig. 3(a) is a front view of a three-dimensional structure; Fig. 3(b) is a side view of Fig. 3(a); Fig. 3(c) is a sectional view taken along line c-c of Fig. 3(a); Fig. 3(d) is a sectional view taken along line d-d of Fig. 3(a); Fig. 3(e) is an end view of Fig. 3(a); Fig. 3(f) is a sectional view taken along line f-f of Fig. 3(a); and Fig. 3(g) is a sectional view taken along line g-g of Fig. 3(a).
Fig. 4(a) is a perspective view of Fig. 3(a); Fig. 4(b) is a front view of Fig. 4(a); Fig. 4(c) is a sectional view taken along line c-c of Fig. 4(b); and Fig. 4(d) is a sectional view corresponding to Fig. 4(c), of a modification of the three-dimensional structure of Fig. 4(a), which includes reinforcing members extending along a plane on which first apexes lie, and reinforcing members extending along a plane on which second apexes lie.
Fig. 5(a) is a perspective view of a different three-dimensional structure; and Fig. 5(b) is a perspective view of a still different three-dimensional structure.
Fig. 6 is a perspective view of a three-dimensional structure having a different apex.
Fig. 7(a) is a perspective view, from the front side, of a different three-dimensional structure; and Fig. 7(b) is a perspective view, from the back side, of the three-dimensional structure of Fig. 7(a).
Fig. 8(a) is a perspective view, from the front side, of a still different three-dimensional structure; and Fig. 8(b) is a perspective view, from the back side, of the three-dimensional structure of Fig. 8(a).
Fig. 9(a) is a perspective view, from the front side, of a further different three-dimensional structure; and Fig. 9(b) is a perspective view, from the back side, of the three-dimensional structure of Fig. 9(a).

### BEST MODE FOR EMBODYING THE INVENTION

The volatile agent-containing structure according to the present invention is a combination of corrugated members formed by corrugating rod-shaped members.

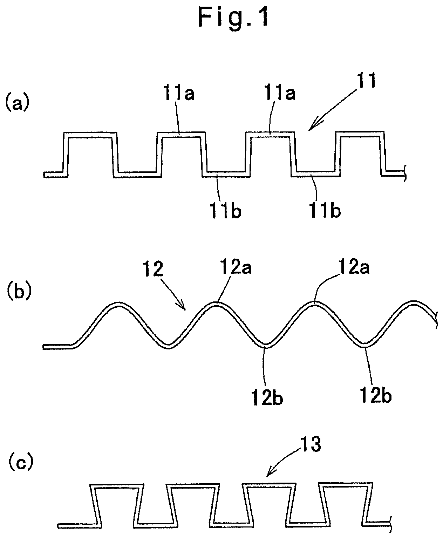

Such corrugated members may each be a corrugated member 11 comprising rectangular waves as shown in Fig. 1(a), or a corrugated member 12 comprising curved waves such as waves in the form of sine curves as shown in Fig. 1(b). Corrugated members comprising rectangular waves are not limited to those as shown in Fig. 1(a), which are bent at substantially a right angle, but may each be a corrugated member 13 which are bent at an acute angle as shown in Fig. 1(c), or, though not shown, may be corrugated members which are bent at an obtuse angle.

By using these corrugated members instead of straight rod-shaped members, it is possible to increase the total surface area of the rod members received in a space of a predetermined volume, thereby increasing the amount of the volatile agent that volatilizes. Especially if the volatile agent-containing structure is constructed from corrugated members comprising rectangular waves, it is possible to maximize the total surface area of the corrugated members, thereby maximizing its efficiency.

A plurality of such corrugated members are crossed together and fixedly joined together at their apexes to form a three-dimensional structure as the volatile agent-containing structure. The apexes of the corrugated members refer to their areas where the variation in their height changes from positive to negative (which correspond to the maximum amplitudes of the respective waves that form crests) and their areas where the variation in their height changes from negative to positive (which correspond to the maximum amplitudes of the respective waves that form troughs), in the longitudinal direction of each corrugated member. The areas where the variation in height changes from positive to negative are hereinafter referred to as the "first apexes", while the areas where the variation in height changes from negative to positive are hereinafter referred to as the "second apexes".

This three-dimensional structure may be designed such that each of a plurality of corrugated members has the apexes of its waves that form crests, i.e. the first apexes (11a of Fig. 1(a) or 12a of Fig. 1(b)) fixedly joined to, while crossing, the corresponding first apexes (11a or 12a) of other corrugated members, and the apexes of its waves that form troughs, i.e. the second apexes (11b of Fig. 1(a) or 12b of Fig. 1(b)) fixedly joined to, while crossing, the corresponding second apexes (11b or 12b) of the other corrugated 1 1 members.

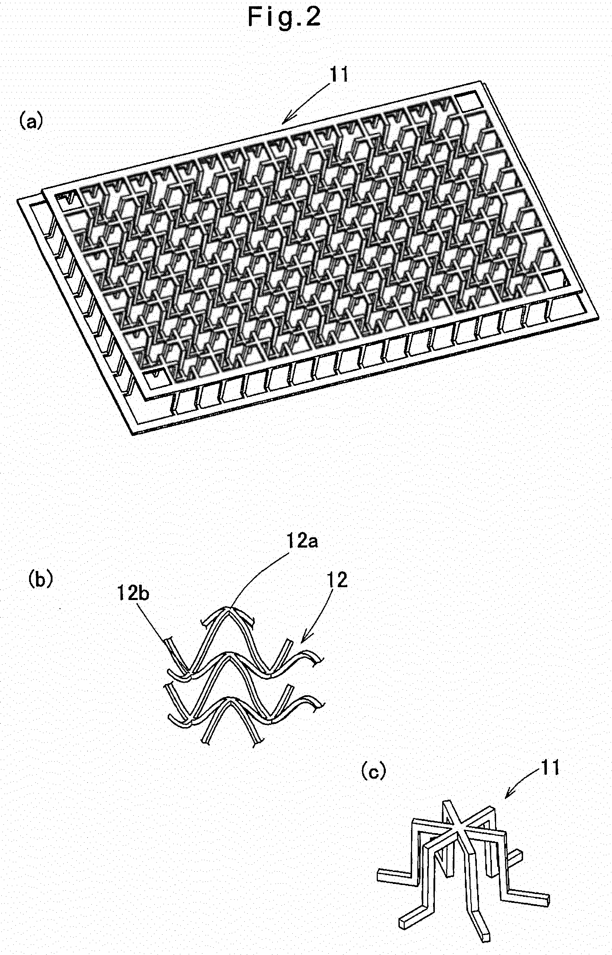

A specific three-dimensional structure formed in the above manner is shown in Fig. 2(a), in which corrugated members shown in Fig. 1(a) are used and in which each of the corrugated members are fixedly joined at each apex with an apex of another corrugated member such that the two apexes cross each other at substantially a right angle. The peripheral edge of this three-dimensional structure is suitably shaped and designed taking into consideration the expected strength of the three-dimensional structure, its shape, and an external container used.

Fig. 2(b) shows a portion of a three-dimensional structure in which corrugated members shown in Fig. 1(b) are used and in which each of the corrugated members are fixedly joined at each apex with an apex of another corrugated member such that the two apexes cross each other at substantially a right angle.

Each corrugated member may be fixedly joined at each apex thereof to an apex of another corrugated member or to an apex of each of two other, three other, or four or more other corrugated members such that these two, three, four, five or more apexes cross each other. Fig. 2(c) shows a portion of a three-dimensional structure in which each corrugated member is fixedly joined at each apex thereof to an apex of each of two other corrugated members.

Such a three-dimensional structure may further include reinforcing members joined to the corrugated members. If the reinforcing members also contain a volatile agent, such reinforcing members increase the effective 12 total surface area of the rod-shaped members received in a space of a predetermined volume, as well as increase the strength of the three-dimensional structure.

Specifically, the above-described three-dimensional structure may be reinforced by connecting together at least two of the apexes on a single plane forming the three-dimensional structure with a straight reinforcing member.

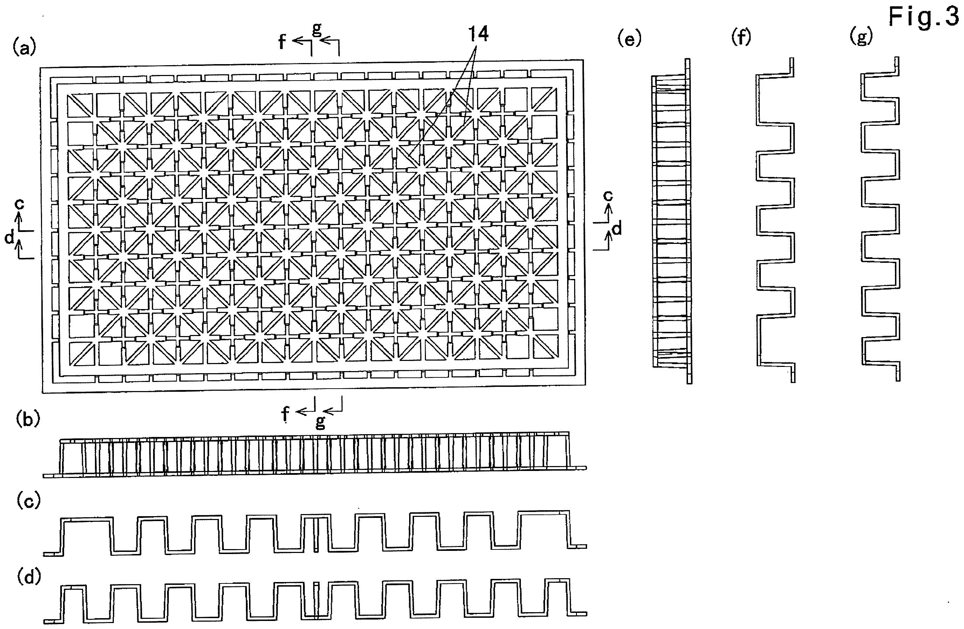

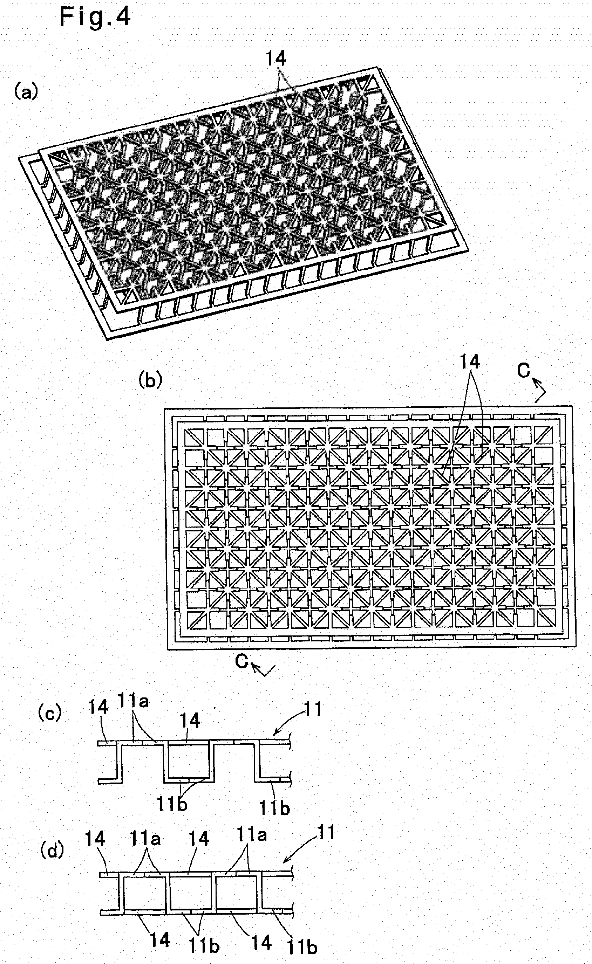

More specific reinforced three-dimensional structures are shown in Figs. 3(a) to 3(g) and Figs. 4(a) to 4(c), in which the three-dimensional structure shown in Fig. 2(a) is reinforced with reinforcing members 14 in the form of straight rod-shaped members. More specifically, in both of these three-dimensional structures, each of the first apexes 11a except those located along the two end edges and the two side edges is fixedly joined to the surrounding four first apexes 11a through reinforcing members 14.

Fig. 3(a) shows a plan view of the three-dimensional structure; Fig. 3(b) is a side view thereof; and Fig. 3(c) and 3(d) are sectional views taken along lines c-c and lines d-d, respectively, of Fig. 3(a). Fig. 3(e) is an end view; and Figs. 3(f) and 3(g) are sectional views taken along lines f-f and g-g, respectively, of Fig. 3(a).

Fig. 4(a) shows a perspective view of the three-dimensional structure; and Fig. 4(b) is a front view of Fig. 4(a), which may regarded as a plan view as in Fig. 3(a). Fig. 4(c) is a sectional view taken along line c-c of Fig. 4(b).

In either of the three-dimensional structures shown in Figs. 3(a) to 3(g) and Figs. 4(a) to 4(c), reinforcing members 14 are provided only on the plane on which the first apexes 11a are arranged. However, reinforcing members 14 may be arranged both on the plane on which the first apexes 11a are arranged and on the plane on which the second apexes 11b are arranged, as shown in Fig. 4(d). Also, it is not necessary to connect reinforcing members 14 to all of the first apexes and/or the second apexes except those located along the end edges and side edges. That is, reinforcing members 14 may be connected to only part of such apexes (first apexes and/or second apexes) depending upon the intended amount of volatilization of the volatile agent and the expected strength of the three-dimensional structure.

The thickness of the rod-shaped members forming the corrugated members, the frequency and amplitude of the waves of the corrugated members, and the number of reinforcing members 14 used should be determined depending upon the location of use of the three-dimensional structure, purpose of use, or intended amount of volatilization of the chemical,

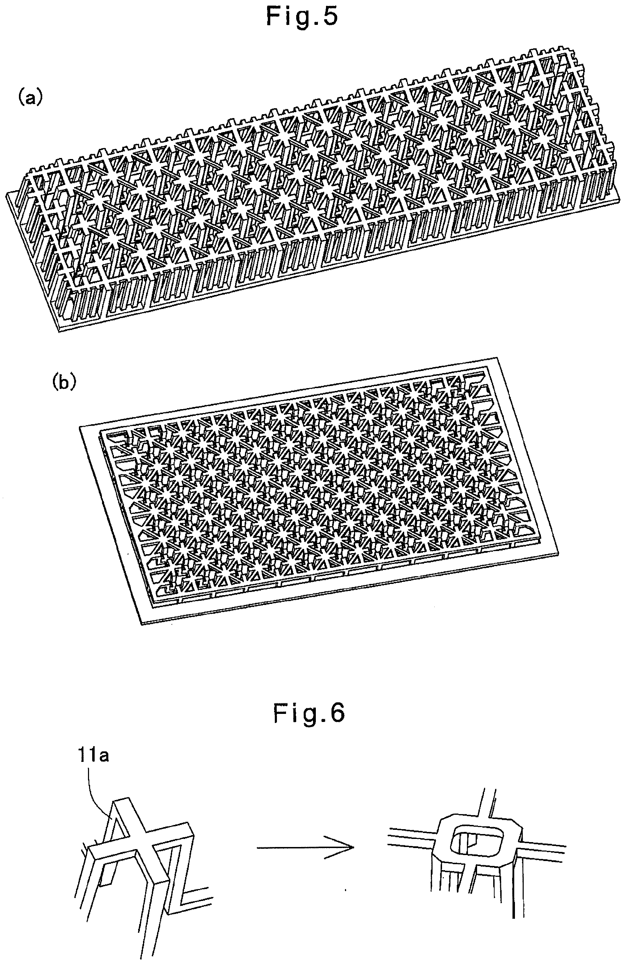

For example, if the three-dimensional structure as shown in Fig. 4(a) has to be placed in a narrow space, the three-dimensional structure may be dimensioned so as to be narrower in width but larger in thickness as shown in Fig. 5(a). If the three-dimensional structure is to be stuck on e.g. a screen door, the three-dimensional structure may have a reduced thickness with reinforcing members provided along the peripheral edges thereof, as shown in Fig. 5(b).

Further, the shape of the first apexes 11a and/or second apexes 11b shown in Fig. 1(a) may be changed to the shape shown in Fig. 6. That is, the cross shape in Fig 1(a) may be changed to the shape of the Chinese character " 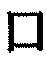 ". This change in shape is made only at the portions where the apexes of each corrugated member cross apexes of other corrugated members. The shape of the apexes shown in Fig. 1(a) may be changed to a shape other than the character " 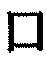 ".

By changing the shape shown in Fig. 3(a) to a different shape, especially to the character " 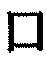 ", if two of the volatile agent-containing structure are stacked one on the other, it is possible to prevent one of these structures from getting stuck in the other due to elasticity of the structures, thus eliminating the necessity of pulling them apart. This improves productivity.

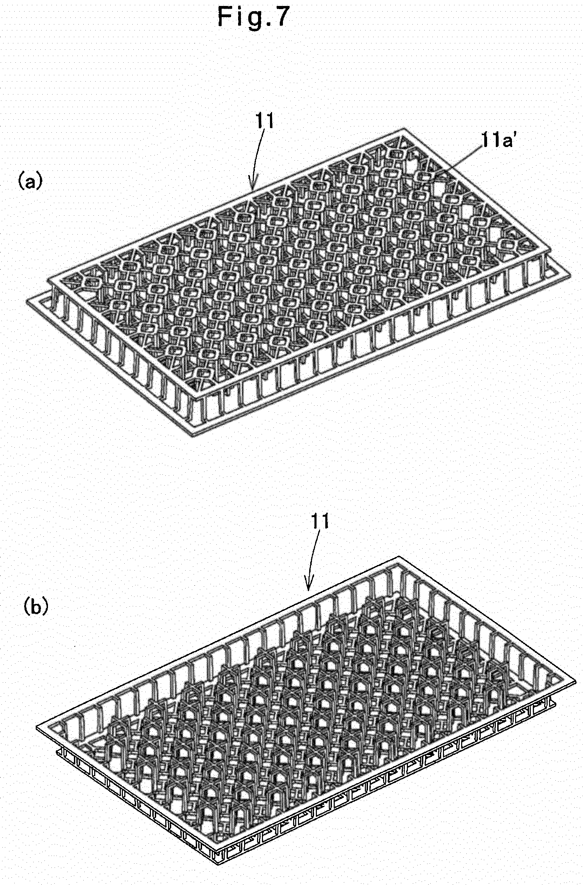

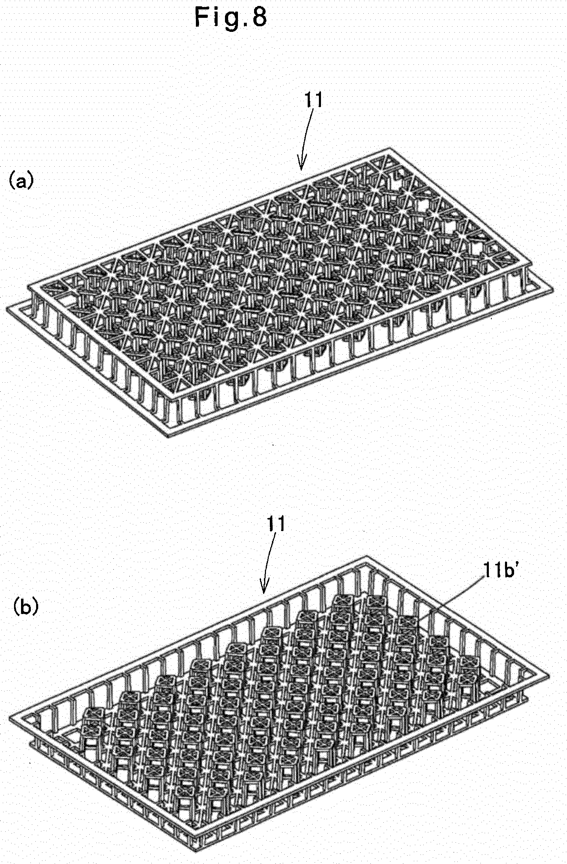

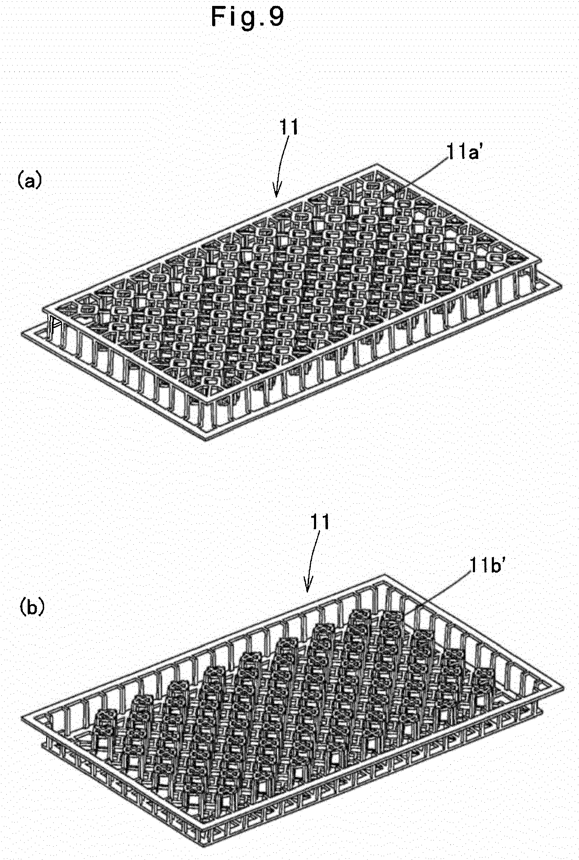

Figs. 7(a) and 7(b), Figs. 8(a) and 8(b), and Figs. 9(a) and 9(b) show different volatile agent-containing structures having " 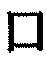 "-shaped apexes. In particular, Figs. 7(a) and 7(b) show a volatile agent-containing structure in which the first apexes 11a are " 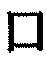 "-shaped; Figs. 8(a) and 8(b) show a volatile agent-containing structure in which the second apexes 11b are " 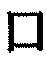 "-shaped, and Figs. 9(a) and 9(b) show a volatile agent-containing structure in which both the first and second apexes 11a and 11b are " 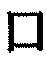 "-shaped.

The three-dimensional structure according to the present invention is made of a resin composition comprising a resin and a volatile agent containing at least one insecticide component and kneaded in the resin, and capable of volatilizing the volatile agent. Ordinarily, volatile agent-containing resin pellets are used to manufacture the three-dimensional structure. These pellets are now described.

The pellets are insecticide component-containing resin pellets containing a volatile agent in the form of a fine powder carrier carrying the at least one insecticide component and kneaded in a resin. If the insecticide component is transfluthrin, at least one crystal deposition inhibiting component has to be added to the pellets. Such pellets can be used as a master batch. Pellets formed by mixing and kneading additional resins as necessary are used as resin compositions to manufacture various resin products. The insecticide component-containing resin pellets according to the present invention can be transported and stored as it is. Bleeding or crystal deposition is less likely to occur during transportation or storage.

The resin forming the resin composition is not particularly limited, provided the resin allows gradual volatilization of the volatile agent from the surface as it is, or if the below-described carrier is used. For example, such a resin may be a polyolefin resin such as a polyethylene (PE), e.g. branched low-density polyethylene (LDPE) or linear low-density polyethylene (LLDPE), or polypropylene (PP), or a polyolefin copolymer of one of these resins and a carboxylate (such as vinyl acetate, methyl methacrylate or ethyl methacrylate). A carboxylate is effective to control volatilization of the volatile agent from the resin surface. That is, generally speaking, the higher the content of a carboxylate relative to a polyolefin resin, the slower the bleeding speed of the volatile agent tends to be. In the present invention, it is possible to advantageously use an ethylene-vinyl acetate copolymer (EVA) or an ethylene-methyl methacrylate copolymer (EMMA) either of which contains 1-35% by weight of the carboxylate relative to 100% by weight of the polyolefin resin.

It is also possible to use a polymer blend formed by blending a polyolefin copolymer and an olefin homopolymer after adjusting their content ratio. If necessary, another high-molecular compound such as a styrene elastomer may be added.

A carboxylate refers to unsaturated carboxylate or vinyl carboxylate.

In the present invention, it is especially preferable to add an ethylene-vinyl acetate copolymer (ethylene-vinyl acetate resin). An ethylene-vinyl acetate copolymer serves not only as a resin component forming pellets, but also serves to adjust the bleeding amount of transfluthrin or profluthrin. If the insecticide component is transfluthrin or profluthrin, the content of the ethylene-vinyl acetate copolymer is preferably not less than 5% by mass, more preferably not less than 10% by mass, especially preferably not less than 15% by mass, of the entire pellets. If the content of this copolymer is less than 5% by mass, the copolymer cannot sufficiently reduce bleeding from the pellets. On the other hand, the content of this copolymer is preferably not more than 50% by mass, more preferably not more than 45% by mass. If the content of this copolymer is more than 50% by mass, even in a resin product formed by mixing the pellets as a master batch with other resins, the copolymer tends to reduce bleeding, i.e. volatilization of the insecticide component to such an extent as to overly reduce the expected function of repelling insects. If the insecticide component is metofluthrin, for the same reasons as described above, the content of the above copolymer is preferably not less than 5% by mass and not more than 35% by mass. If a plurality of insecticide components are used which are in the form of a mixture of metofluthrin as the major insecticide component and other compounds, the content of the copolymer is preferably not less than 10% by mass and not more than 35% by mass.

The number ratio of the ethylene units to the vinyl acetate units, in the copolymer is preferably 90 : 10 to 70 : 30. If the vinyl acetate units are too few, the vinyl acetate units can hardly change the physical properties of the polyethylene, and thus can hardly perform the function required in the present invention, i.e. the function of adjusting bleeding. On the other hand, if the vinyl acetate units are too many, it is difficult to form pellets.

The melt mass-flow rate (MFR) of the ethylene-vinyl acetate copolymer is preferably not less than 5 g/10 minutes, and not more than 50 g/10 minutes. If the MFR is too low, the copolymer can hardly adjust bleeding. If the MFR is too high, the influence of the copolymer on the physical properties of the pellets could become too large to ignore.

In order to adjust the weight or physical properties of the pellets, the pellets may contain, in addition to the ethylene-vinyl acetate copolymer (EVA), a polyolefin resin as described above. From a viewpoint of affinity for the ethylene-vinyl acetate copolymer, the polyolefin resin is preferably a polyethylene. From a viewpoint of formability, the polyethylene is preferably a low-density polyethylene, and particularly a branched low-density polyethylene (LDPE) or a linear low-density polyethylene (LLDPE).

The above-mentioned at least one crystal deposition inhibiting component inhibits deposition of transfluthrin crystals on the pellet surfaces, and may be any one of dibasic acid ester compounds, aromatic ester compounds, higher fatty acid ester compounds, pyrethroid compounds other than transfluthrin, and synergists for pyrethroid, which are all liquid at normal temperature. Otherwise, a plurality of such crystal deposition inhibiting components may be used which are selected from the above-listed compounds.

Among these crystal deposition inhibiting components, dibasic acid ester compounds are preferable. Among them, dibasic acid ester compounds having a boiling point of 200 to 330°C are especially preferable because such compounds are especially effective in inhibiting deposition of crystals. Such compounds include, but not limited to, dibutyl succinate, dibutyl gluconate, diethyl adipate, and diethyl phthalate.

As the above-mentioned pyrethroid compound or compounds, one or both of phenothrin and metofluthrin may be used. In order to further effectively inhibit deposition of crystals, these compounds are preferably used together with the above-described dibasic acid ester compound or compounds.

If the above-described synergist for pyrethroid is used together with pyrethroid, such a synergist reinforces the insecticidal action of the pyrethroid. Typical such synergists include N-(2-ethylhexyl)-bicyclo[2,2,1]-hept-5-ene-2,3-dicarboximide, or piperonyl butoxide. Such a synergist for pyrethroid is also preferably used together with the above-described dibasic acid ester compound to more effectively inhibit deposition of crystals.

The content of the at least one crystal deposition inhibiting component is preferably not less than 1% by mass and not more than 20% by mass, of the entire pellets. Since a dibasic acid ester compound is especially effective, this compound is preferably used as a main crystal deposition inhibiting component, in combination with other crystal deposition inhibiting components.

In addition to the above-described components, the volatile agent-containing resin pellets may contain other additives such as resin stabilizers and colorants, provided these additives do not influence the effects of the volatile agent containing the insecticide component, as well as the function of inhibiting bleeding and deposition of crystals by the above-described resin and crystal deposition inhibiting component.

As long as volatile agent-containing resin pellets have the above-described composition and content ratio, their manufacturing steps are not particularly limited. For example, the pellets may be manufactured by mixing together the insecticide component and the fine power carrier, adding the ethylene-vinyl acetate copolymer to the mixture, together with other polyolefin resins, if necessary, and kneading them together with the crystal deposition inhibiting component.

The volatile agent containing the insecticide component is not particularly limited, provided its active component can be volatized at normal temperature, and may be in the form of an insecticide, a repellent, an aromatic, a deodorant, an anti-mold agent, or an anti-microbial agent.

Insecticide components usable in the present invention include pyrethroid insecticide components such as transfluthrin, metofluthrin, empenthrin, profluthrin, allethrin, flumethrin, prallethrin, resmethrin, phthalthrin, phenothrin and natural pyrethrin; organophosphorus insecticide components such as dichlorvos, fenitrothion and malathion; and insect growth regulators such as methoprene and hydroprene. Among them, it is especially preferable to use a pyrethroid insecticide selected from among transfluthrin, metofluthrin, empenthrin and profluthrin. Some of these compounds have optical or geometric isomers based on asymmetric carbon or unsaturated bonds. Needless to say, any one or any mixture of these isomers are equally usable in the present invention.

Metofluthrin and profluthrin are both liquid at normal temperature, while transfluthrin is crystalline at normal temperature. Since transfluthrin is crystalline, this compound is preferably used together with a crystal deposition inhibiting component.

The above-mentioned repellent may be N,N-diethyl toluamide (DEET), dimethyl phthalate, dibutyl phthalate, 2-ethyl-hexanediol, dibutyl succinate or p-menthane-3,8-diol.

The above-mentioned aromatic may be citronella oil, orange oil, lemon oil, lime oil, "yuzu" (Japanese citron) oil, lavender oil, peppermint oil, eucalyptus oil, jasmine oil, "hinoki" (Japanese cypress) oil, green tea essential oil, limonene, α-pinene, linalool, geraniol, phenylethyl alcohol, amylcinnanic aldehyde, or benzyl acetate.

Deodorants usable in the present invention, especially volatile ones, include "hiba" ("hinoki" leaf) oil, "hinoki" oil, bamboo extract, sagebrush extract, tung oil, and pyruvic acid esters such as ethyl pyruvate and phenylethyl pyruvate.

The above-mentioned anti-mold agent may be 2-n-octyl-4-isothiazolin-3-one, isopropylmethylphenol, or orthophenyl(-phenol.

The above-mentioned anti-microbial agent may be hinokitiol, tetrahydrolinalool, eugenol, citronellal, or allyl isothiocyanate.

If necessary, the volatile agent-containing resin pellets may further contain talc, alumina, silica, microcrystalline silica, known as white carbon, and/or a fine powder carrier such as fine powder silicate, diatomite, a zeolite, a clay mineral, or wood dust. The pellets may further contain colorants, stabilizers, anti-statistic agents, etc. If a fine powder carrier is used, a volatile agent such as the insecticide component can be carried in the pellets. Also, such a fine powder carrier makes it possible, in the first stage, to prepare a master batch in which the volatile agent is contained in high concentration in the resin, and in the second stage, to prepare the required resin composition by diluting the concentration of the volatile agent to a predetermined value by adding resin. In the thus formed resin composition, continuous pores may form that extend from inside the resin composition to its surface, thus allowing the volatile agent inside to bleed more easily onto the surface of the resin composition.

If metofluthrin is used as the insecticide component in the pellets, its content is preferably not less than 10% by mass and not more than 50% by mass, more preferably not less than 15% by mass and not more than 35% by mass. If transfluthrin or profluthrin is used, its content is preferably not less than 20% by mass and not more than 60% by mass, more preferably not less than 30% by mass and not more than 50% by mass, of the entire pellets. In either case, if the insecticide component is too low in content, the master batch has to be prepared in a large amount, which reduces manufacturing efficiency. If the insecticide component is too high in content, it may become difficult to control the amount of bleeding and crystal deposition, thus causing the pellets to become wet and tacky. This may cause trouble during storage, transportation or forming. If a plurality of insecticide components (compounds) are used, the sum of the contents of these compounds is preferably controlled to not more than 60% by mass.

If a fine powder carrier as described above is used, its content is preferably not less than 10% by mass, and not more than 30% by mass, of the entire pellets. If less than 10% by mass, the pellets cannot sufficiently carry the volatile agent, so that it becomes difficult to manufacture the pellets as a master batch. Also, since the carrier is too low in content, the carrier cannot carry the entire insecticide component, so that an excessive amount of the insecticide component may bleed. If the content of the fine powder carrier is higher than 30% by mass, the carrier may influence the strength of the three-dimensional structure or the amount of bleeding of the volatile agent. Further, since the carrier is present in the insecticide product formed from the pellets too, if the carrier is too high in content, the carrier may influence the physical properties of the insecticide product.

Preferably, the fine powder carrier has a number-average particle diameter of not less than 1 µm and not more than 30 µm, and more preferably not less than 5 µm and not more than 20 pm. If its number-average particle diameter is larger than 30 pm, even if its content is within the above range, the carrier cannot sufficiently carry the insecticide component because its surface area is small. As a result, the pellets tend to become wet and tacky. On the other hand, it is practically difficult to prepare a carrier having a number-average particle diameter of less than 1 pm. Moreover, such an extremely fine carrier tends to show widely different physical properties, which is not desirable.

The volatile agent-containing structure according to the present invention can be formed by injection-molding a resin composition obtained by adding, ordinarily, a polyolefin resin to the above-described volatile agent-containing pellets as a master batch. The injection molding may be carried out under known conditions taking into consideration the kind of resin used, and the content ratios of the components.

As the polyolefin resin, a low-density polyethylene, for example, may be advantageously used, because a low-density polyethylene has a good affinity for the ethylene-vinyl acetate copolymer contained in the volatile agent-containing resin pellets, and also can minimize the volatilization and decomposition loss of the insecticide component due to high temperature during forming because of its low melting temperature. The resin composition may contain other additives, provided these additives do not 24 change the properties of the insecticide component during forming, and also do not unnecessarily inhibit volatilization of the insecticide component.

The content of the volatile agent in the resin composition should be determined taking into consideration the kind of the volatile agent used, the kind of the resin used, use environment, use period, etc. The longer the use period, the higher the content of the volatile agent has to be. However, suitably, its content is within the range of 1 to 20% by mass. If less than 1% by mass, the volatile agent can hardly achieve the expected function. If higher than 20% by mass, forming becomes difficult after kneading the volatile agent. Also, an excessively large amount of volatile agent may bleed onto the surface of the resin, causing the resin to become wet and tacky.

The forming method is not particularly limited, and may be extrusion molding, injection molding, pressing, or vacuum molding, though extrusion molding or injection molding is preferable.

Regarding the content ratio of the additional resin or resins such as a polyolefin resin, preferably, the volatile agent-containing resin pellets are not less than 15% by mass and not more than 80% by mass, while the olefin resin is not less than 20% by mass and not more than 85% by mass. With this arrangement, the resin member formed contains a suitable amount of the insecticide component such that the insecticide component can be volatilized at a suitable rate.

Since the volatile agent contained in the resin composition bleeds onto and volatilizes from the surface of the volatile agent-containing 25 structure, if a human hand touches the surface of this structure, volatile agent may adhere to the hand. Thus, the volatile agent-containing structure according to the present invention is preferably placed in a container. Such a container is not particularly limited, provided the container can sufficiently prevent human hands from touching the volatile agent-containing structure inside, and is formed with holes (open windows) through which the volatile agent can volatilize sufficiently. Preferably, according to how and where the volatile agent-containing structure is used, the container is configured to be suspendable from an object or to be stuck on e.g. a screen door.

The volatile agent-containing structure according to the present invention is also advantageous in that it is more rigid than an insecticide tool in the form of a net, and can be smoothly placed in a container during manufacturing.

With the volatile agent-containing structure according to the present invention placed in a container, by suspending the container from an object, sticking the container to e.g. a door screen, or simply placing the container on an object, the volatile agent-containing structure can be used as an insecticide, an insect repellent, an aromatic, or a deodorant, according to the type of the volatile agent used.

The volatile agent-containing structure manufactured from the resin composition using the insecticide component-containing resin pellets according to the present invention can kill or repel many kinds of insects and other arthropods, such as mosquitos including Culex pipiens, Culex pipiens molestus, and Aedes albopictus, gnats, midges, flies, sandflies and 26 tineas.

### EXAMPLES

The present invention is now described in a more detailed manner based on Examples.

First, the volatile agent-containing structure according to the present invention is considered.

### (Example 1 of the entire structure)

The volatile agent-containing three-dimensional structure shown in Fig. 4(a) was subjected to the following experiment.

A master batch in the form of pellets was produced by kneading together 50 parts by weight of transfluthrin (made by Sumitomo Chemical Co., Ltd.) as the volatile agent, 18 parts by weight of white carbon (Carplex #80, made by Evonik Industries; average particle diameter: 15 µm), 20 parts by weight of an ethylene-vinyl acetate copolymer (Ultrasen 710, made by Tosoh Corporation; Vinyl acetate content in the copolymer: 28%), and 12 parts by weight of LDPE (Suntec LDM6520, made by Asahi Kasei Corporation), at 120 to 140°C.

Then, 100 parts by weight of the thus obtained pellets and 300 parts by weight of the above-mentioned LDPE were kneaded together at 120 to 140°C to obtain a resin composition, and the resin composition was formed into the volatile agent-containing three-dimensional structure (10 g) shown in Fig. 4(a) by injection molding.

The rod-shaped members and the reinforcing members 14 forming the three-dimensional structure both had a square cross-section, about 1.3 mm each side. The distance between the first apexes 11a and the second apexes 11b of the corrugated members forming the three-dimensional structure was 10 mm, while the first apexes 11a and the second apexes 11b were both 8 mm long. The entire volatile agent-containing structure measured 95 mm by 160 mm by 12 mm, and had a surface area of 29900 mm2.

The thus obtained volatile agent-containing structure was hung in a room kept at 25°C with winds blowing at 0.5 m/second, and the amount and the duration of volatilization of the volatile agent were calculated by measuring the weight of the volatile agent-containing structure at predetermined time intervals.

Volatilization of the volatile agent continued for about 200 days at an average rate of 5.8 mg/day.

### (Comparative Example 1 of the entire structure)

A tubular net with a diamond-shaped mesh (weighing 4.8 g) was prepared by injection-molding the resin composition obtained in Example 1 of the entire structure. The thread forming the net has an outer diameter of 0.7 mm with a mesh size of 4 mm each side. When the tubular net was flattened, the net measured 80 mm by 150 mm (which means that if the net is cut along a longitudinal line and spread on a flat surface, it measures 160 mm by 150 mm). Thus, this volatile agent-containing structure is about twice the size of the three-dimensional structure of Example 1, while its surface area was 20400 mm².

For this net member, the amount and the duration of volatilization of the volatile agent were measured in the same manner as in Example 1.

For this net member, while volatilization of the volatile agent continued for about 200 days, the rate of volatilization was only 2.9 mg/day during the entire 200-day period. This means that in order to increase the rate of volatilization to a level equivalent to that of the volatile agent-containing structure according to the present invention, it is necessary to further increase the size and/or the weight of the net. But it is difficult to further increase the size of the net member, which is already fairly large in size.

### (Results)

As is apparent from above, for the volatile agent-containing structure of Example 1, the rate of volatilization is about twice that of Comparative Example 1, which is substantially larger than the difference in surface area between the volatile agent-containing structure of Example 1 and that of Comparative Example 1. Also, it was discovered that by reducing the portions of the volatile agent-containing structure that are brought into contact with the container, it is possible to minimize a reduction in the rate of volatilization of the volatile agent, as well as soiling of the container, due to contact with the inner wall of the container.

Next, the components of the insecticide component-containing resin pellets are considered. The below described 11 examples (of the invention) and three comparative examples are simply referred to as "examples" and "comparative examples", respectively, instead of "examples for considering the components" and "comparative examples for considering the components".

First, agents used are listed below:
- Transfluthrin (Biothrin, made by Sumitomo Chemical Co., Ltd.);
- Metofluthrin (Eminence, made by Sumitomo Chemical);
- Microcrystalline silica (Carplex #80, made by Evonik Industries; white carbon; average particle diameter: 15µm);
- Ethylene-vinyl acetate copolymer (Ultrasen 710, made by Tosoh Corporation; ethylene-to-vinyl-acetate unit ratio = 72 : 28; hereinafter referred to as "EVA-A");
- Ethylene-vinyl acetate copolymer (Ultrasen 541, made by Tosoh Corporation; ethylene-to-vinyl-acetate unit ratio = 90 : 10; hereinafter referred to as "EVA-B");
- Low-density polyethylene (Suntec LDM6520, made by Asahi Kasei Corporation; hereinafter referred to as "LDPE-A");
- Low-density polyethylene (Novatec LDLJ802, made by Japan Polyethylene Corporation; hereinafter referred to as "LDPE-B");
- Dibutyl succinate (made by Shiono Finesse, Ltd.); and
- Phenothrin (Sumithrin, made by Sumitomo Chemical)

### <Manufacturing method of pellets>

The insecticide component, fine particle carrier, ethylene-vinyl acetate copolymer, crystal deposition inhibiting component (if the insecticide component is transfluthrin), and other resins were mixed together in the below-described content ratios. In particular, with 36 parts by weight of the transfluthrin as the insecticide component carried by 16 parts by weight of white carbon, the transfluthrin was kneaded with 40 parts by weight of the ethylene-vinyl acetate copolymer, 3.2 parts by weight of the dibutyl succinate as the crystal deposition inhibiting component, and 4.8 parts of the LDPE (LDPE-A), at 120 to 140°C, and the kneaded mixture was formed into insecticide component-containing resin pellets, 3 mm in diameter and 5 mm long, by extrusion in a twin-screw extruder made by Technovel Corporation. For the pellets obtained, it was determined whether there was bleeding or deposition of crystals.

### <Degree of bleeding>

About 10 g of the pellets were placed in a glass dish, 7 mm in diameter, and after uniformly spreading the pellets, the glass dish was sealed with a lid. The glass dish was left at rest for 7 days at 40°C. Then, the pellets were visually observed to determine if there exists volatile agent on the surfaces of the pellets. The results of the visual observation are shown in Table 1 below, in which ○ indicates that no volatile agent was observed; Δ indicates that the surfaces looked shiny with volatile agent; and × indicates that the surfaces were clearly wetted with volatile agent.

### <Crystal deposition>

The same specimens used to determine the degree of bleeding were left at rest for 7 days at 25°C, and then, they were visually observed to determine whether there is crystal deposition. The results of the visual observation are also shown in Table 1, in which ○ indicates that no crystal deposition was observed; Δ indicates that slight whitening was observed; and × indicates that deposition of needlelike crystals was observed.

### <Manufacturing method of volatile agent-containing structure>

The volatile agent-containing (10g) comprising the three-dimensional structure shown in Figs. 4(a) to 4(c) were produced by kneading together 100 parts by weight of the insecticide component-containing resin pellets and 300 parts by weight of LDPE (LDPE-B) (containing 10 parts by weight of colorant pellets), and molding the kneaded mixture in an injection molder.

Rectangular corrugated members 1 (1a, 1b) and reinforcing members 2 that together form the three-dimensional structure both have a square section about 1.3 mm each side. The distance between the first apexes 1a and the second apexes 1b of the corrugated members 1 forming the three-dimensional structure was 10 mm, while the first apexes 1a and the second apexes 1b were both 8 mm long. The entire volatile agent-containing structure measured 95 mm by 160 mm by 12 mm.

The thus obtained volatile agent-containing structure was hung in a room kept at 25°C with winds blowing at 0.5 m/second, and the amount and the duration of volatilization of the volatile agent were calculated by measuring the weight of the volatile agent-containing structure at predetermined time intervals.

Volatilization of the volatile agent continued for about 130 days at an average rate of 5.8 mg/day.

Insecticide component-containing resin pellets having the compositions shown in Table 1 were manufactured in the manner substantially described in <Manufacturing method of pellets> above. For the pellets obtained, it was determined whether there was bleeding or deposition of crystals.

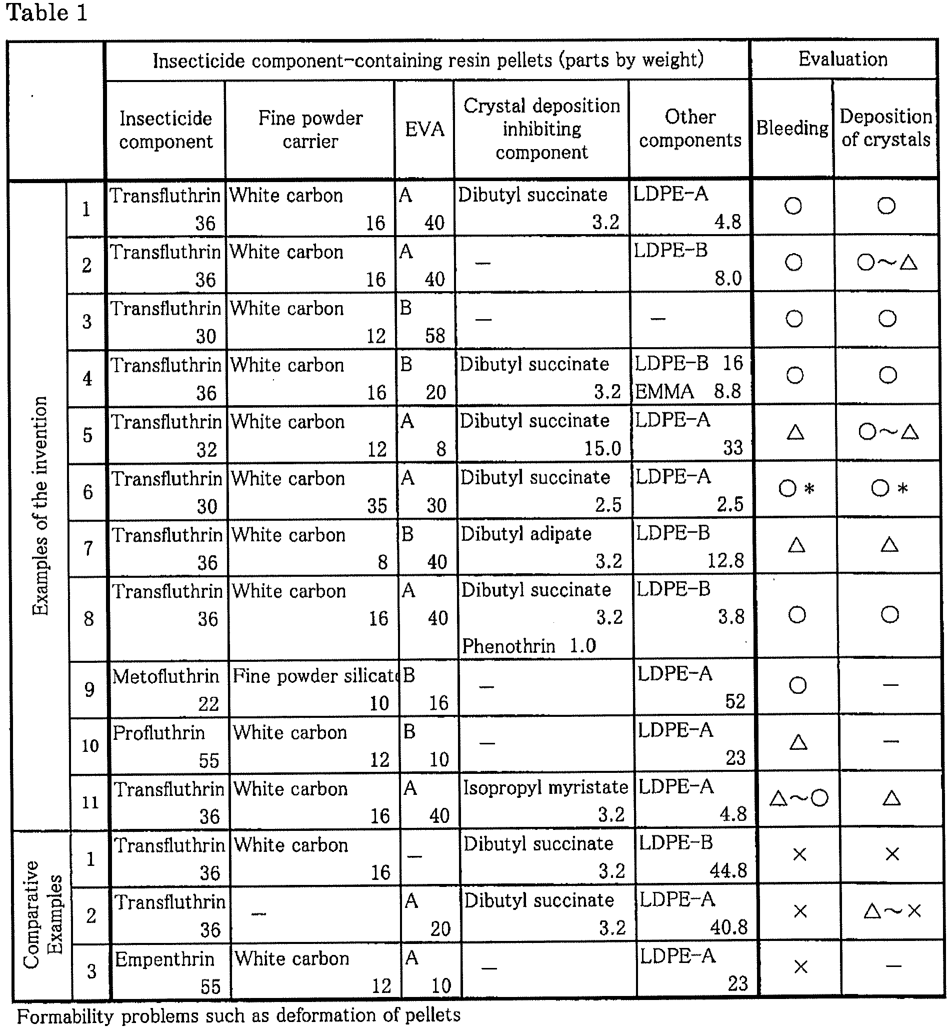

The test results show that in the insecticide component-containing resin pellets according to the present invention, which contain an insecticide component comprising at least one of transfluthrin, metofluthrin and profluthrin, a fine powder carrier, and an ethylene-vinyl acetate copolymer, no excessive bleeding was observed, and for the pellets containing transfluthrin, whitening due to crystal deposition did not grow to such an extent as to cause any actual problem. It was also discovered that as the crystal deposition inhibiting component, a dibasic ester compound such as dibutyl succinate can more effectively inhibit deposition of crystals than isopropyl myristate (higher fatty acid ester compound).

On the other hand, as is apparent from the results of the comparative examples, if the pellets are missing any of the insecticide component, fine-powder carrier, and ethylene-vinyl acetate copolymer, the pellets had problems regarding bleeding and deposition of crystals.

Tubular insecticide nets (4.8 g) with a diamond-shaped mesh having the resin compositions shown in Table 2 were prepared in the manner substantially described in <Manufacturing method of volatile agent-containing structure> above, by extruding the resin compositions shown in Table 2. The threads forming these nets had an outer diameter of 0.7 mm with a mesh size of 4 mm each side. When the tubular nets were flattened, the nets measured 80 mm by 150 mm.

Two of each example were hung in a room kept at 25°C with winds blowing at 0.5 m/second, and the amount and the duration of volatilization of the volatile agent were calculated by measuring the weight of the insecticide nets at predetermined time intervals. The results of measurement are also shown in Table 2.

**Table 2**

| | Pellets used | Insecticide net (parts by weight) | | | | Average rate of volatilization | Duration of volatilization |
|---|---|---|---|---|---|---|---|
| | (Example No.) | Insecticide component | Fine powder carrier | EVA | Crystal deposition inhibiting component | (mg/day) | (days) |
| a | Example No.1 | Transfluthrin | White carbon | A | Dibutyl succinate | 5.9 | 130 |
| | | 9.0 | 4.0 | 10 | 0.8 | | |
| b | Example No.3 | Transfluthrin | White carbon | B | - | 4.7 | 140 |
| | | 7.5 | 3.0 | 14 | | | |
| c | Example No.5 | Transfluthrin | White carbon | A | Dibutyl succinate | 6.5 | 90 |
| | | 8.0 | 3.0 | 2 | 3.8 | | |
| d | Example No.6 | Transfluthrin | White carbon | A | Dibutyl succinate | 5.0 | 135 |
| | | 7.5 | 8.8 | 7.5 | 0.6 | | |
| e | Example No.9 | Metofluthrin | Fine powder silicate | B | - | 3.1 | 210 |
| | | 11 | 5.0 | 8 | | | |

For the insecticide nets a and e, the average rate of volatilization and the duration of volatilization were both as intended. On the other hand, while the pellets of Examples 3 and 6 were free of the problems of bleeding and deposition of crystals, for the insecticide nets b and d, which were formed from the pellets of Examples 3 and 6, the rate of volatility was slightly low because the content of the ethylene-vinyl acetate copolymer or the fine powder carrier was slightly high. Conversely, for the insecticide net c, since the content of the ethylene-vinyl acetate was low, bleeding tends to occur, and the rate of volatilization was slightly high.

### DESCRIPTION OF THE NUMERALS

11, 12, 13. Corrugated member
11a, 12a. First apex
11b, 12b. Second apex
14. Reinforcing member

## Claims

1. A volatile agent-containing three-dimensional structure comprising:
a plurality of corrugated members (11,12,13) formed by corrugating rod-shaped members,
wherein each of the corrugated members has at least part of apexes (11a, 11a', 12a) thereof fixedly joined to apexes (11a, 11a', 12a) of another of the corrugated members such that the apexes fixedly joined together cross each other, and
wherein the three-dimensional structure is formed from a resin composition containing a volatile agent having volatility and kneaded in the resin composition such that the volatile agent can bleed onto and volatilize from a surface of the three-dimensional structure.

2. The volatile agent-containing three-dimensional structure according to claim 1, wherein each of the corrugated members comprises rectangular waves.

3. The volatile agent-containing three-dimensional structure according to claim 1 or 2,
wherein the apexes of the corrugated members lie on a plane forming a surface of the three-dimensional structure, and
wherein at least two of the apexes are coupled together by a straight rod-shaped member (14).

4. The volatile agent-containing three-dimensional structure according to any of claims 1 to 3, wherein the resin composition is formed from volatile agent-containing resin pellets containing a polyolefin resin.

5. The volatile agent-containing three-dimensional structure according to claim 4, wherein the volatile agent-containing resin pellets are formed from an insecticide component-containing resin comprising at least one insecticide component selected from the group consisting of transfluthrin, metofluthrin and profluthrin, a fine powder carrier, and an ethylene-vinyl acetate copolymer.

6. The volatile agent-containing three-dimensional structure according to claim 5, wherein the insecticide component is transfluthrin, and wherein the insecticide component-containing resin further contains a crystal deposition inhibiting component.

7. The volatile agent-containing three-dimensional structure according to claim 6, wherein the volatile agent-containing resin pellets comprise:
not less than 20% by mass and not more than 60% by mass of transfluthrin;
not less than 10% by mass and not more than 30% by mass of the fine powder carrier;
not less than 10% by mass and not more than 50% by mass of the ethylene-vinyl acetate copolymer; and
not less than 1 % by mass and not more than 20% by mass of the crystal deposition inhibiting component.

8. The volatile agent-containing three-dimensional structure according to claim 6 or 7, wherein the crystal deposition inhibiting component comprises at least one compound which is liquid at normal temperature and which is selected from the group consisting of aromatic ester compounds, higher fatty acid ester compounds, dibasic acid ester compounds, pyrethroid compounds other than transfluthrin, and synergists for pyrethroid.

9. The volatile agent-containing three-dimensional structure according to claim 8, wherein the crystal deposition inhibiting component comprises a dibasic acid ester compound having a boiling point of 200 to 330°C.

10. The volatile agent-containing three-dimensional structure according to claim 9, wherein the dibasic acid ester compound having a boiling point of 200 to 330°C is dibutyl succinate.

11. The volatile agent-containing three-dimensional structure according to any of claims 8 to 10, wherein the crystal deposition inhibiting component comprises at least one pyrethroid compound other than transfluthrin, said at least one pyrethroid compound being selected from metofluthrin and phenothrin.

12. The volatile agent-containing three-dimensional structure according to claim 5, wherein the volatile agent-containing resin pellets comprises:
not less than 10% by mass and not more than 50% by mass of metofluthrin as the insecticide component;
not less than 10% by mass and not more than 30% by mass of the fine powder carrier; and
not less than 5% by mass and not more than 35% by mass of the ethylene-vinyl acetate copolymer.

13. An insecticide product comprising the volatile agent-containing three-dimensional structure according to any of claims 1 to 12.

## Patentansprüche

1. Dreidimensionale Struktur, die einen flüchtigen Wirkstoff enthält, umfassend:
eine Vielfalt geriffelter Elemente (11, 12, 13), gebildet durch Riffeln stabförmiger Elemente,
wobei bei jedem der geriffelten Elemente mindestens ein Teil von deren Scheitelbereichen (11a, 11a', 12a) fest mit den Scheitelbereichen (11a, 11a', 12a) eines anderen geriffelten Elements verbunden sind, so dass die fest miteinander verbundenen Scheitelbereiche einander kreuzen, und
wobei die dreidimensionale Struktur aus einer Harzzusammensetzung gebildet ist, die einen flüchtigen Wirkstoff enthält, der Flüchtigkeit aufweist und so in der Harzzusammensetzung verknetet ist, dass der flüchtige Wirkstoff auf eine Oberfläche der dreidimensionalen Struktur durchschlagen und von dieser verdunsten kann.

2. Dreidimensionale Struktur, die einen flüchtigen Wirkstoff enthält, gemäß Anspruch 1, wobei jedes der geriffelten Elemente Rechteckwellen umfasst.

3. Dreidimensionale Struktur, die einen flüchtigen Wirkstoff enthält, gemäß Anspruch 1 oder 2,
wobei die Scheitelbereiche der geriffelten Elemente auf einer Ebene liegen, die eine Oberfläche der dreidimensionalen Struktur bildet, und
wobei mindestens zwei der Scheitelbereiche durch ein gerades stabförmiges Element (14) miteinander gekoppelt sind.

4. Dreidimensionale Struktur, die einen flüchtigen Wirkstoff enthält, gemäß einem der Ansprüche 1 bis 3, wobei die Harzzusammensetzung aus Harzpellets, die einen flüchtigen Wirkstoff enthalten, gebildet ist, die einen Polyolefinharz enthalten.

5. Dreidimensionale Struktur, die einen flüchtigen Wirkstoff enthält, gemäß Anspruch 4, wobei die Harzpellets, die einen flüchtigen Wirkstoff enthalten, aus einem Harz, das eine Insektizid-Komponente enthält, gebildet sind, das mindestens eine Insektizid-Komponente, ausgewählt aus der Gruppe, bestehend aus Transfluthrin, Metofluthrin und Profluthrin, ein Feinpulver-Trägermaterial und ein Ethylen-Vinylacetat-Copolymer umfasst.

6. Dreidimensionale Struktur, die einen flüchtigen Wirkstoff enthält, gemäß Anspruch 5, wobei es sich bei der Insektizid-Komponente um Transfluthrin handelt und wobei das Harz, das die Insektizidkomponente enthält, ferner eine kristallablagerungshemmende Komponente enthält.

7. Dreidimensionale Struktur, die einen flüchtigen Wirkstoff enthält, gemäß Anspruch 6, wobei die Harzpellets, die das flüchtige Mittel enthalten, umfassen:
nicht weniger als 20 Massen-% und nicht mehr als 60 Massen-% Transfluthrin;
nicht weniger als 10 Massen-% und nicht mehr als 30 Massen-% des Feinpulver-Trägermaterials;
nicht weniger als 10 Massen-% und nicht mehr als 50 Massen-% des EthylenVinylacetat-Copolymers und
nicht weniger als 1 Massen-% und nicht mehr als 20 Massen-% der kristallablagerungshemmenden Komponente.

8. Dreidimensionale Struktur, die einen flüchtigen Wirkstoff enthält, gemäß Anspruch 6 oder 7, wobei die kristallablagerungshemmende Komponente mindestens eine Verbindung umfasst, die bei normaler Temperatur flüssig ist, und die aus der Gruppe ausgewählt ist, bestehend aus aromatischen Esterverbindungen, höheren Fettsäureesterverbindungen, dibasischen Säureesterverbindungen, anderen Pyrethroidverbindungen als Transfluthrin und Pyrethroid-Synergisten.

9. Dreidimensionale Struktur, die einen flüchtigen Wirkstoff enthält, gemäß Anspruch 8, wobei die kristallablagerungshemmende Komponente eine dibasische Säureesterverbindung mit einem Siedepunkt von 200 bis 330 °C umfasst.

10. Dreidimensionale Struktur, die einen flüchtigen Wirkstoff enthält, gemäß Anspruch 9, wobei es sich bei der dibasischen Säureesterverbindung mit einem Siedepunkt von 200 bis 330 °C um Dibutylsuccinat handelt.

11. Dreidimensionale Struktur, die einen flüchtigen Wirkstoff enthält, gemäß einem der Ansprüche 8 bis 10, wobei die kristallablagerungshemmende Komponente mindestens eine andere Pyrethroidverbindung als Transfluthrin umfasst, wobei die mindestens eine Pyrethroidverbindung aus Metofluthrin und Phenothrin ausgewählt ist.

12. Dreidimensionale Struktur, die einen flüchtigen Wirkstoff enthält, gemäß Anspruch 5, wobei die Harzpellets, die das flüchtige Mittel enthalten, umfassen:
nicht weniger als 10 Massen-% und nicht mehr als 50 Massen-% Metofluthrin als Insektizidkomponente;
nicht weniger als 10 Massen-% und nicht mehr als 30 Massen-% des Feinpulver-Trägermaterials und
nicht weniger als 5 Massen-% und nicht mehr als 35 Massen-% des Ethylen-Vinylacetat-Copolymers.

13. Insektizidprodukt, umfassend die dreidimensionale Struktur, die einen flüchtigen Wirkstoff enthält, gemäß einem der Ansprüche 1 bis 12.

## Revendications

1. Structure tridimensionnelle contenant un agent volatil comprenant :
une pluralité d'éléments ondulés (11, 12, 13) constitués par des éléments ondulés en forme de tige,
dans laquelle chacun des éléments ondulés affiche au moins une partie de sommets (11a, 11a', 12a) de ceux-ci joints de manière fixe à des sommets (11a, 11a', 12a) d'un autre des éléments ondulés de sorte que les sommets joints de manière fixe ensemble s'entrecoupent, et
dans laquelle la structure tridimensionnelle est constituée d'une composition de résine contenant un agent volatil présentant une volatilité et mélangé dans la composition de résine de sorte que l'agent volatil puisse déteindre sur et se volatiliser depuis une surface de la structure tridimensionnelle.

2. La structure tridimensionnelle contenant un agent volatil selon la revendication 1, dans laquelle chacun des éléments ondulés comprend des ondulations rectangulaires.

3. La structure tridimensionnelle contenant un agent volatil selon la revendication 1 ou 2,
dans laquelle les sommets des éléments ondulés sont placés sur un plan constituant une surface de la structure tridimensionnelle, et
dans lequel au moins deux des sommets sont couplés ensemble par un élément en forme de tige droite (14).

4. La structure tridimensionnelle contenant un agent volatil selon l'une quelconque des revendications 1 à 3, dans laquelle la composition de résine est constituée de pastilles de résine contenant un agent volatil contenant une résine polyoléfine.

5. La structure tridimensionnelle contenant un agent volatil selon la revendication 4, dans laquelle les pastilles de résine contenant un agent volatil sont constituées d'une résine contenant des composants insecticides comprenant au moins un composant insecticide sélectionné à partir du groupe consistant en de la transfluthrine, de la métofluthrine et de la profluthrine, un transporteur en poudre fine, et un copolymère éthylène-acétate de vinyle.

6. La structure tridimensionnelle contenant un agent volatil selon la revendication 5, dans laquelle le composant insecticide est de la transfluthrine, et dans laquelle la résine contenant un composant insecticide contient en outre un composant empêchant un dépôt de cristaux.

7. La structure tridimensionnelle contenant un agent volatil selon la revendication 6, dans laquelle les pastilles de résine contenant un agent volatil comprennent :
pas moins de 20 % en masse et pas plus de 60 % en masse de transfluthrine ;
pas moins de 10 % en masse et pas plus de 30 % en masse du transporteur en poudre fine ;
pas moins de 10 % en masse et pas plus de 50 % en masse du copolymère éthylène-acétate de vinyle, et
pas moins de 1 % en masse et pas plus de 20 % en masse du composant empêchant un dépôt de cristaux.

8. La structure tridimensionnelle contenant un agent volatil selon la revendication 6 ou 7, dans laquelle le composant empêchant un dépôt de cristaux comprend au moins un composé qui est liquide à température normale et qui est sélectionné dans le groupe consistant en des composés d'ester aromatique, des composés d'ester d'acide gras supérieur, des composés d'ester d'acide dibasique, des composés de pyréthroïde autres que la transfluthrine, et des synergistes pour la pyréthroïde.

9. La structure tridimensionnelle contenant un agent volatil selon la revendication 8, dans laquelle le composant empêchant un dépôt de cristaux comprend un composé d'ester d'acide dibasique présentant un point d'ébullition de 200 à 330°C.

10. La structure tridimensionnelle contenant un agent volatil selon la revendication 9, dans laquelle le composé d'ester d'acide dibasique comprenant un point d'ébullition de 200 à 330°C est un succinate de dibutyl.

11. La structure tridimensionnelle contenant un agent volatil selon l'une quelconque des revendications 8 à 10, dans laquelle le composant empêchant un dépôt de cristaux comprend au moins un composé de pyréthroïde autre que la transfluthrine, ledit au moins un composé de pyréthroïde étant sélectionné à partir de métofluthrine et phénothrine.

12. La structure tridimensionnelle contenant un agent volatil selon la revendication 5, dans laquelle les pastilles de résine contenant un agent volatil comprennent :
pas moins de 10% en masse et pas plus de 50% en masse de métofluthrine en tant que composant insecticide ;
pas moins de 10 % en masse et pas plus de 30 % en masse du transporteur en poudre fine ; et
pas moins de 5% en masse et pas plus de 35% en masse du copolymère éthylène-acétate de vinyle.

13. Produit insecticide comprenant la structure tridimensionnelle contenant un agent volatil selon l'une quelconque des revendications 1 à 12.
